# FASCICULE DE BREVET EUROPEEN

(11) **EP 3 304 269 B1**
(45) Date de publication et mention de la délivrance du brevet: **07.04.2021**
(21) Numéro de dépôt: 16727431.5
(22) Date de dépôt: 31.05.2016
(51) Int. Cl.: G06F 3/0488, G06F 3/0482, F41G 1/00, F41G 3/00

(54) **SYSTÈME DE VISÉE COMPORTANT UN ÉCRAN RECOUVERT D'UNE INTERFACE TACTILE ET PROCÉDÉ DE VISÉE CORRESPONDANT**
ZIELSYSTEM MIT DURCH EINE TAKTILE SCHNITTSTELLE ABGEDECKTEM BILDSCHIRM UND ENTSPRECHENDES ZIELVERFAHREN
AIMING SYSTEM COMPRISING A SCREEN COVERED WITH A TACTILE INTERFACE AND CORRESPONDING AIMING METHOD

(30) Priorité: 01.06.2015 FR 1554967
(43) Date de publication de la demande: 11.04.2018
(73) Titulaire: Safran Electronics & Defense, 75015 Paris (FR)
(72) Inventeur: JAMET, Alexandre, 75015 Paris (FR); MORIN, Cyril, 75015 Paris (FR); GRENIER, Jordane, 75015 Paris (FR); HURAULT, Olivier, 75015 Paris (FR); HOMMAIS, Stéphane, 75015 Paris (FR); DAZENIERE, Thomas, 75015 Paris (FR)
(74) Mandataire: Decorchemont, Audrey Véronique Christèle
(86) Numéro de dépôt international: PCT/EP2016/062308
(87) Numéro de publication internationale: WO 2016/193271

(56) Documents cités:
- EP-A1- 1 012 820
- EP-A2- 2 711 059
- WO-A1-01/29815
- US-A1- 2009 207 141
- US-A1- 2012 090 216

## Description

L'invention concerne le domaine de la visée et du pointage d'un dispositif sur une cible visualisée sur un écran. L'invention a plus particulièrement pour objet un système de visée comportant un écran ayant une surface au moins partiellement recouverte d'une interface tactile. L'invention concerne également un procédé de visée mis en œuvre par un tel système de visée.

### ARRIERE-PLAN TECHNOLOGIQUE DE L'INVENTION

Dans le domaine naval, il est connu des navires équipés d'un système de visée pour le pointage d'une arme sur une cible. Typiquement, un système de visée comporte une unité de commande d'affichage qui est reliée à un écran pour afficher des images d'un appareil de prise de vue embarqué sur le navire et qui est agencée pour incruster un cadre de visée sur lesdites images. En service, l'opérateur déplace le cadre de visée au moyen d'un manche de commande de type joystick.

Pour améliorer l'ergonomie en limitant le nombre d'interfaces différentes, il a été imaginé de recouvrir la surface de l'écran d'une interface tactile. L'unité de commande est agencée pour détecter une zone de l'écran sur laquelle l'opérateur appuie un doigt et pour centrer le cadre de visée dans cette zone. L'opérateur peut ainsi déplacer le cadre de visée dans le but de venir encadrer ou pointer une cible visible sur les images pour verrouiller ladite cible.

Toutefois, comme la cible peut être de petites dimensions, l'opérateur peut masquer la cible avec son doigt. Il s'avère donc délicat pour l'opérateur de pointer correctement une cible notamment lorsque plusieurs cibles potentielles se trouvent dans une même zone de l'écran ou lorsque la cible se déplace sur l'écran.

Le document US 2012/090216 divulgue ainsi un viseur électronique pour arme à feu comprenant un écran tactile pour le réglage d'un réticule. A cet effet, l'utilisateur vient cliquer à plusieurs reprises sur l'écran tactile pour ajuster la position du réticule sur l'écran.

Le document EP 2 711 059 propose d'interagir avec un écran tactile dans un but de divertissement, en appuyant directement sur l'écran tactile.

Dans le document US 2009/207141, le document EP 1 012 820 ou le document WO 01/29815 l'utilisateur agit en revanche sur un joystick ou un pavé tactile.

### OBJET DE L'INVENTION

Un but de l'invention est de proposer un système de visée qui permette à un opérateur de pointer plus aisément une cible visible sur un écran dudit système de visée. Un but de l'invention est également de proposer un procédé de visée correspondant.

### BREVE DESCRIPTION DE L'INVENTION

En vue de la réalisation de ce but, on propose un système de visée comportant une unité de commande d'affichage et un écran relié à l'unité de commande d'affichage pour afficher des images d'un appareil de prise de vue, l'écran ayant une surface au moins partiellement recouverte d'une interface tactile reliée à l'unité de commande d'affichage et l'unité de commande d'affichage étant agencée pour incruster un cadre de visée dans les images affichées à l'écran.

Selon l'invention, l'unité de commande d'affichage est agencée pour :
- incruster une zone de commande dans les images affichées à l'écran au niveau de l'interface tactile, et
- déplacer le cadre de visée sur l'écran en fonction de contacts exercés sur l'interface tactile dans la zone de commande.

Grâce à la zone de commande distincte du cadre de visée, il s'avère plus aisé pour un opérateur de visualiser le cadre de visée malgré les déplacements dudit cadre sur l'écran. En particulier, comme l'opérateur ne déplace pas le cadre de visée directement avec ses doigts ledit cadre et la cible demeurent plus visibles et il est donc plus simple pour l'opérateur de suivre une cible mobile sur les images ou de pointer une cible située au milieu d'autres cibles potentielles.

L'invention concerne également un procédé de visée mis en œuvre par un système de visée comportant un écran pour afficher des images d'un appareil de prise de vue, l'écran ayant une surface au moins partiellement recouverte d'une interface tactile, le procédé comporte l'étape d'incruster un cadre de visée dans les images affichées à l'écran, le procédé étant caractérisé en ce qu'il comporte en outre les étapes d'incruster une zone de commande dans les images affichées à l'écran au niveau de l'interface tactile et de déplacer le cadre de visée sur l'écran en fonction de contacts exercés sur l'interface tactile dans la zone de commande.

### BREVE DESCRIPTION DES DESSINS

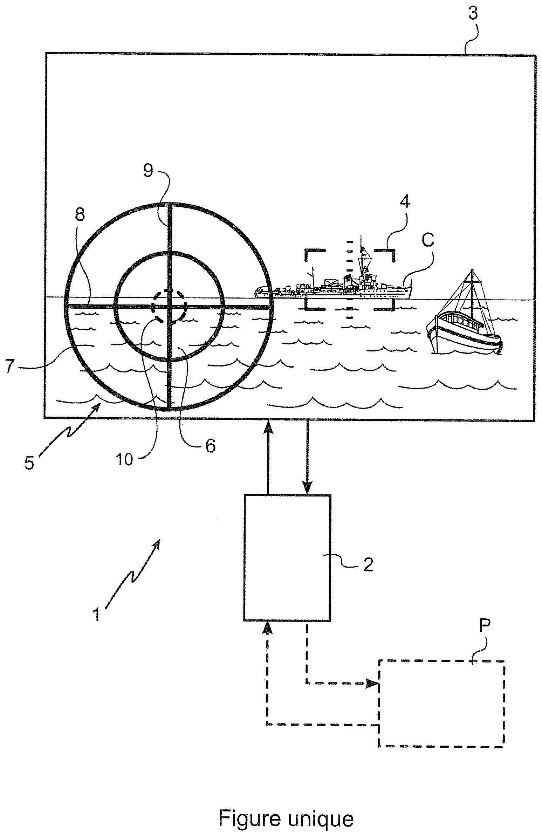

L'invention sera mieux comprise à la lumière de la description qui suit d'un mode de réalisation particulier non limitatif de l'invention. Il sera fait référence à la figure unique illustrant schématiquement le système de visée de l'invention.

### DESCRIPTION DETAILLEE DE L'INVENTION

En référence à la figure unique, le système de visée selon l'invention, généralement désigné en 1, est ici porté par un bâtiment d'une flotte navale.

Le système de visée 1 comporte une unité de commande d'affichage 2 ainsi qu'un écran 3 relié à l'unité de commande d'affichage 2 pour afficher des images d'un appareil de prise de vue P qui est également porté par le bâtiment pour l'acquisition d'images extérieures au bâtiment et qui est également relié à l'unité de commande d'affichage 2. L'écran 3 a une surface ici entièrement recouverte d'une interface tactile reliée à l'unité de commande d'affichage 2. L'interface tactile est connue en elle-même et comprend par exemple un maillage de capteurs de pression ou bien encore de capteurs résistifs, capacitifs, inductifs ou autres.

L'unité de commande d'affichage 2 est agencée pour incruster un cadre de visée 4 dans les images affichées à l'écran 3. Selon l'invention, l'unité de commande d'affichage 2 est en outre configurée pour incruster une zone de commande 5 dans les images affichées à l'écran 3 et pour autoriser un déplacement du cadre de visée 4 sur l'écran 3 en fonction d'un contact exercé sur l'interface tactile dans la zone de commande 5 par un opérateur.

L'unité de commande d'affichage 2 est en outre ici agencée pour déclencher un verrouillage d'une cible C visible à l'écran 3 lorsque le cadre de visée 4 désigne ladite cible C et que deux contacts distincts sont exercés simultanément sur la zone de commande 5 comme il sera vu par la suite.

De façon particulière, l'unité de commande d'affichage 2 est agencée pour incruster le cadre de visée 4 sur l'écran 3 uniquement lors d'un contact exercé sur la zone de commande 5. Ceci permet de limiter le nombre d'incrustations sur l'écran 3 ce qui simplifie la lecture des images affichées par l'écran 3. Dès que le contact exercé dans la zone de commande 5 cesse, le cadre de visée 4 disparaît de l'écran.

L'unité de commande d'affichage 2 est ici également agencée pour incruster la zone de commande 5 sur les images uniquement lors d'un contact exercé sur l'interface tactile. Ceci permet de limiter encore davantage le nombre d'incrustations sur l'écran. De préférence, l'unité de commande d'affichage 2 est configurée pour incruster la zone de commande 5 au niveau dudit point de contact exercé par l'opérateur sur l'interface tactile.

D'une utilisation à une autre (c'est-à-dire après chaque interruption du contact exercé sur l'interface tactile), la zone de commande 5 peut donc changer de place sur l'écran 3. Néanmoins au cours d'une même utilisation (c'est-à-dire lorsque le contact est maintenu de façon continue), la zone de commande 5 demeure fixe sur l'écran 3.

De façon particulière, l'unité de commande d'affichage 2 et l'interface tactile sont agencées de sorte que la zone de commande 5 comporte une première partie 6 et une deuxième partie 7 et de sorte que, lors d'un contact exercé sur la première partie 6, le cadre de visée 4 est déplacé sur l'écran 3 dans une première plage de vitesse et lors d'un contact exercé sur la deuxième partie 7, le cadre de visée 4 est déplacé sur l'écran 3 dans une deuxième plage de vitesse. Typiquement, la première partie 6 forme une portion circulaire de la zone de commande 5 et la deuxième partie 7 forme une portion circulaire périphérique de la zone de commande 5 concentrique à la première partie 6.

Ceci permet à l'opérateur de moduler la vitesse à laquelle il souhaite déplacer le cadre de visée 4 selon que la cible C à pointer est plus ou moins proche du cadre de visée 4 et ce sans que l'opérateur ne doive de lui-même adapter la vitesse de déplacement de son doigt. La visée de la cible C se trouve dès lors simplifiée.

De préférence, la première plage de vitesse est supérieure à la deuxième plage de vitesse afin que l'opérateur puisse déplacer rapidement le cadre de visée 4 lorsque son doigt appuie dans la première partie 6, au centre de la zone de commande 5, et puisse déplacer plus lentement le cadre de visée 4 lorsque son doigt appuie dans la deuxième partie 7, à la périphérie de la zone de commande 5. Cet agencement est particulièrement ergonomique pour l'opérateur.

En conséquence, l'unité de commande d'affichage 2 est préférentiellement agencée de sorte que la première partie 6 de la zone de commande 5 soit matérialisée sur l'écran 3 par un premier cercle et la deuxième partie 7 de la zone de commande 5 soit matérialisée sur l'écran 3 par un deuxième cercle concentrique audit premier cercle. Les deux parties 6, 7 sont ainsi délimitées sur l'écran ce qui facilite le pilotage du cadre de visée 4 par la zone de commande 5 pour l'opérateur.

Selon un mode de réalisation particulier, l'unité de commande d'affichage 2 matérialise également la zone de commande 5 en découpant ladite zone par une ligne horizontale 8 et par une ligne verticale 9. Contrairement aux deux parties 6, 7 de la zone de commande 5, ces lignes ne définissent pas de portions aux propriétés différentes dans la zone de commande 5 mais servent de repères à l'opérateur pour le déplacement de son doigt et par là du cadre de visée 4.

De la sorte, la zone de commande 5 comporte ici huit portions de commande sous forme de segments annulaires : quatre portions définies par le premier cercle, la ligne horizontale 8 et la ligne verticale 9 et quatre portions définies par le premier cercle, le deuxième cercle, la ligne horizontale 8 et la ligne verticale 9. La zone de commande 5 est dès lors matérialisée par une cible.

Le procédé de visée mis en œuvre par le système de visée 1 précité va être à présent décrit.

L'opérateur commence par appuyer sur l'interface tactile. L'unité de commande d'affichage 2 incruste alors le cadre de visée 4 sur l'écran 3, par exemple au centre de l'écran 3, et incruste de plus la zone de commande 5 au niveau du point de contact exercé par l'opérateur sur l'interface tactile. L'incrustation est réalisée de telle manière qu'à l'intersection des lignes 8 et 9, positionnée sur le premier point de contact, est centrée une portion centrale 10. La portion centrale 10 n'est pas ici matérialisée par l'unité de commande d'affichage 2 sur l'écran 3. La zone de commande 5 est fixe et est affichée tant que le doigt de l'opérateur est en contact avec l'écran.

Puis sans relâcher le contact exercé sur la zone de commande 5 par son doigt, pour ne pas faire disparaître le cadre de visée 4 et la zone de commande 5, l'opérateur déplace son doigt dans la zone de commande 5 hors de la portion centrale 10 pour provoquer un déplacement similaire du cadre de visée 4 sur l'écran 3 grâce à l'unité de commande d'affichage 2. Si l'opérateur relève son doigt le cadre de visée 4 et la zone de commande 5 disparaissent de l'écran 3.

L'unité de commande d'affichage 2 est ici agencée de sorte que tant qu'un contact est exercé dans la zone de commande 5 hors de la portion centrale 10, le cadre de visée 4 se déplace sur l'écran 3 selon la direction définie par la position du contact dans la zone de commande 5 et ce même si ledit contact ne se déplace pas dans la zone de commande 5. L'unité de commande d'affichage 2 est ici également agencé de sorte que, lorsque le contact exercé revient selon un mouvement sensiblement radial dans la portion centrale 10, le mouvement du cadre de visée 4 se trouve arrêté. Le cadre de visée 4 est alors immobile et seul un déplacement du point de contact hors de la portion centrale 10 entraîne de nouveau un déplacement correspondant du cadre de visée 4 sur l'écran 3.

Une fois que le cadre de visée 4 encadre ou désigne une cible C souhaitée, l'opérateur amène son doigt dans la portion centrale 10, selon un mouvement sensiblement radial, de la zone de commande 5 pour immobiliser le cadre de visée 4. Puis l'opérateur exerce un deuxième contact sur la zone de commande 5 avec un deuxième doigt sans relâcher le contact exercé sur la portion centrale de la zone de commande 5 avec le premier doigt qui a permis de déplacer le cadre de visée 4. Ceci permet au système de visée 1 de verrouiller la cible C.

Bien entendu l'invention n'est pas limitée au mode de réalisation décrit et on peut y apporter des variantes de réalisation sans sortir du cadre de l'invention tel que défini par les revendications.

En particulier, bien qu'ici le système de visée soit porté par un bâtiment, le système de visée pourra être porté par un tout autre véhicule par exemple terrestre.

Bien qu'ici l'interface tactile recouvre entièrement l'écran, l'interface tactile pourra ne recouvrir que partiellement l'écran. L'unité de commande d'affichage pourra incruster la zone de commande au niveau du point de contact exercé par l'opérateur ou à tout autre endroit de l'écran. Par exemple, l'unité de commande d'affichage pourra incruster la zone de commande toujours dans une même portion de l'écran, indépendamment de l'endroit du point de contact exercé par l'opérateur, comme par exemple dans un coin inférieur de l'écran.

Le cadre de visée et/ou la zone de commande pourront être toujours visibles sur l'écran malgré l'absence de contact sur l'interface tactile.

Bien entendu, la zone de commande pourra être matérialisée autrement que par une cible comme par exemple un simple cercle. La zone de commande pourra être découpée en un nombre de portions ou de parties différentes de ce qui a été décrit.

La portion centrale pourra également être matérialisée sur l'écran par l'unité de commande d'affichage. Bien qu'ici la portion centrale forme une zone centrée sur le premier point de contact sur l'interface tactile, la portion centrale pourra prendre une autre forme et être réduite par exemple à un simple point confondu avec le premier point d'appui. Le système de visée pourra ne pas comporter de portion centrale, l'unité de commande d'affichage étant alors par exemple agencée pour ne déplacer le cadre de visée sur l'écran que lors d'un déplacement du contact exercé dans la zone de commande. De la sorte, lorsque le contact cessera de se déplacer dans la zone de commande mais sera toujours présent, le cadre de visée demeurera immobile.

## Revendications

1. Système de visée (1) comportant une unité de commande d'affichage (2) et un écran (3) relié à l'unité de commande d'affichage pour afficher des images d'un appareil de prise de vue (P), l'écran ayant une surface au moins partiellement recouverte d'une interface tactile reliée à l'unité de commande d'affichage et l'unité de commande d'affichage étant agencée pour incruster un cadre de visée (4) dans les images affichées à l'écran, le système étant **caractérisé en ce que** l'unité de commande d'affichage est agencée pour :
- incruster une zone de commande dans les images affichées à l'écran au niveau de l'interface tactile, la zone de commande étant distincte du cadre de visée, et
- déplacer le cadre de visée sur l'écran en fonction de contacts exercés sur l'interface tactile dans la zone de commande.

2. Système selon la revendication 1, dans lequel l'unité de commande d'affichage (2) est agencée pour matérialiser la zone de commande (5) sur l'écran (3) par une figure géométrique qui est découpée en portions par une ligne horizontale (8) et une ligne verticale (9).

3. Système selon la revendication 1, dans lequel la zone de commande (5) est configurée de sorte à comporter une première partie (6) et une deuxième partie (7), l'unité de commande d'affichage (2) étant agencée pour déplacer le cadre de visée (4) sur l'écran (3) dans une première plage de vitesse en fonction d'un contact exercé sur la première partie et pour déplacer le cadre de visée sur l'écran dans une deuxième plage de vitesse en fonction d'un contact exercé sur la deuxième partie.

4. Système selon la revendication 3, dans lequel l'unité de commande d'affichage (2) est agencée de sorte que la première partie (6) forme sur l'écran (3) une portion circulaire et de sorte que la deuxième partie (7) forme sur l'écran une portion circulaire périphérique concentrique à la première partie.

5. Système selon la revendication 1, dans lequel l'unité de commande d'affichage (2) est agencée pour incruster le cadre de visée (4) et/ou la zone de commande (5) sur l'écran uniquement lors d'un contact exercé sur l'interface tactile.

6. Système selon la revendication 1, dans lequel l'unité de commande d'affichage (2) est agencée pour déclencher un verrouillage d'une cible (C) visible à l'écran lorsque le cadre de visée (4) désigne ladite cible et qu'une commande de verrouillage est transmise à l'unité de commande.

7. Système selon la revendication 6, dans lequel la commande de verrouillage comprend deux contacts distincts exercés simultanément sur la zone de commande (5).

8. Procédé de visée mis en œuvre par un système de visée (1) comportant un écran (3) pour afficher des images d'un appareil de prise de vue (P), l'écran ayant une surface au moins partiellement recouverte d'une interface tactile, le procédé comportant l'étape d'incruster un cadre de visée (4) dans les images affichées à l'écran, le procédé étant **caractérisé en ce qu'**il comporte en outre les étapes de :
- incruster une zone de commande dans les images affichées à l'écran au niveau de l'interface tactile, la zone de commande étant distincte du cadre de visée, et
- déplacer le cadre de visée sur l'écran en fonction de contacts exercés sur l'interface tactile dans la zone de commande

## Patentansprüche

1. Zielsystem (1), umfassend eine Anzeigesteuereinheit (2) und einen Bildschirm (3), der mit der Anzeigesteuereinheit verbunden ist, um Bilder einer Bildaufnahmevorrichtung (P) anzuzeigen, wobei der Bildschirm eine Oberfläche hat, die zumindest teilweise mit einer berührungsempfindlichen Oberfläche abgedeckt ist, die mit der Anzeigesteuereinheit verbunden ist, und wobei die Anzeigesteuereinheit ausgebildet ist, um einen Zielrahmen (4) in die auf dem Bildschirm angezeigten Bilder einzublenden, wobei das System **dadurch gekennzeichnet ist, dass** die Anzeigesteuereinheit ausgebildet ist, um:
- eine Steuerzone in die auf dem Bildschirm angezeigten Bilder im Bereich der berührungsempfindlichen Oberfläche einzublenden, wobei die Steuerzone von dem Zielrahmen getrennt ist, und
- Verschieben des Zielrahmens auf dem Bildschirm in Abhängigkeit von Berührungen, die auf die berührungsempfindliche Oberfläche in der Steuerzone ausgeübt werden.

2. System nach Anspruch 1, bei dem die Anzeigesteuereinheit (2) ausgebildet ist, um die Steuerzone (5) auf dem Bildschirm (3) durch eine geometrische Figur, die durch eine horizontale Linie (8) und eine vertikale Linie (9) in Teile unterteilt ist, zu materialisieren.

3. System nach Anspruch 1, bei dem die Steuerzone (5) so ausgebildet ist, dass sie einen ersten Bereich (6) und einen zweiten Bereich (7) hat, wobei die Anzeigesteuereinheit (2) ausgebildet ist, um den Zielrahmen (4) auf dem Bildschirm (3) in einem ersten Geschwindigkeitsbereich in Abhängigkeit von einer auf den ersten Abschnitt ausgeübten Berührung zu verschieben, und um den Zielrahmen auf dem Bildschirm in einem zweiten Geschwindigkeitsbereich in Abhängigkeit von einer auf den zweiten Bereich ausgeübten Berührung zu verschieben.

4. System nach Anspruch 3, bei dem die Anzeigesteuereinheit (2) so ausgebildet ist, dass der erste Bereich (6) auf dem Bildschirm (3) einen kreisförmigen Teil bildet und dass der zweite Bereich (7) auf dem Bildschirm einen zum ersten Teil konzentrischen kreisförmigen Umfangsteil bildet.

5. System nach Anspruch 1, bei dem die Anzeigesteuereinheit (2) ausgebildet ist, um den Zielrahmen (4) und/oder die Steuerzone (5) auf dem Bildschirm nur bei einer auf die berührungsempfindliche Oberfläche ausgeübten Berührung einzublenden.

6. System nach Anspruch 1, bei dem die Anzeigesteuereinheit (2) ausgebildet ist, um eine Verriegelung eines auf dem Bildschirm sichtbaren Ziels (C) auszulösen, wenn der Zielrahmen (4) das genannte Ziel zeigt und wenn ein Verriegelungsbefehl an die Steuereinheit übertragen wird.

7. System nach Anspruch 6, bei dem der Verriegelungsbefehl zwei verschiedene Berührungen umfasst, die gleichzeitig auf die Steuerzone (5) ausgeübt werden.

8. Zielverfahren, das durch ein Zielsystem (1) umgesetzt wird, das einen Bildschirm (3) umfasst, um Bilder einer Bildaufnahmevorrichtung (P) anzuzeigen, wobei der Bildschirm eine Oberfläche hat, die zumindest teilweise mit einer berührungsempfindlichen Oberfläche abgedeckt ist, wobei das Verfahren den Schritt des Einblendens eines Zielrahmens (4) in die auf dem Bildschirm angezeigten Bilder umfasst, wobei das Verfahren **dadurch gekennzeichnet ist, dass** es ferner die Schritte umfasst:
- Einblenden einer Steuerzone in die auf dem Bildschirm angezeigten Bilder im Bereich der berührungsempfindlichen Oberfläche, und
- Verschieben des Zielrahmens auf dem Bildschirm in Abhängigkeit von Berührungen, die auf die berührungsempfindliche Oberfläche in der Steuerzone ausgeübt werden.

## Claims

1. An aiming system (1) comprising a display control unit (2) and a screen (3) connected to the display control unit in order to display images from a camera (P), the screen having a surface that is covered at least in part by a touch interface connected to the display control unit, and the display control unit being arranged to inlay an aiming frame (4) in the images displayed on the screen, the system being **characterized in that** the display control unit is arranged to:
- inlay a control zone in the images displayed on the screen and where the screen has the touch interface, the control zone being distinct from the aiming frame; and
- move the aiming frame on the screen as a function of contacts exerted on the touch interface in the control zone.

2. A system according to claim 1, wherein the display control unit (2) is arranged to represent the control zone (5) on the screen (3) as a geometrical figure that is subdivided into portions by a horizontal line (8) and by a vertical line (9).

3. A system according to claim 1, wherein the control zone (5) is configured so as to include a first portion (6) and a second portion (7), the display control unit (2) being arranged to move the aiming frame (4) on the screen (3) in a first speed range as a function of contact being exerted in the first portion, and to move the aiming frame on the screen in a second speed range as a function of contact being exerted in the second portion.

4. A system according to claim 3, wherein the display control unit (2) is arranged in such a manner that the first portion (6) forms on the screen (3) a circular portion and in such a manner that the second portion (7) forms on the screen a peripheral circular portion concentric with the first.

5. A system according to claim 1, wherein the display control unit (2) is arranged to inlay the aiming frame(4) and/or the control zone (5) on the screen only while contact is being exerted on the touch interface.

6. A system according to claim 1, wherein the display control unit (2) is arranged to trigger locking onto a target (C) visible on the screen when the aiming frame(4) designates said target and when a locking command is transmitted to the control unit.

7. A system according to claim 6, wherein the locking command comprises two distinct contacts being exerted simultaneously on the control zone (5).

8. An aiming method performed using an aiming system (1) having a screen (3) for displaying images from a camera (P), the screen having a surface that is covered at least in part by a touch interface, the method including the step of inlaying a aiming frame(4) in the images displayed on the screen, and the method being **characterized in that** it further comprises the steps of:
- inlaying a control zone in the images displayed on the screen and where the screen has the touch interface, the control zone being distinct from the aiming frame; and
- moving the aiming frame on the screen as a function of contact exerted on the touch interface in the control zone.
